# EUROPÄISCHE PATENTSCHRIFT

(11) **EP 2 715 163 B1**
(45) Veröffentlichungstag und Bekanntmachung des Hinweises auf die Patenterteilung: **18.10.2017**
(21) Anmeldenummer: 12723672.7
(22) Anmeldetag: 24.05.2012
(51) Int. Cl.: F16C 19/36, F16C 33/58, F16C 19/22

(54) **GEOMETRIEKONZEPT FÜR EINEN BORD EINES ROLLENLAGERS**
GEOMETRIC CONCEPT FOR A RIB OF A ROLLER BEARING
CONCEPT GÉOMÉTRIQUE POUR UN BORD DE ROULEMENT À ROULEAUX

(30) Priorität: 24.05.2011 DE 102011076328
(43) Veröffentlichungstag der Anmeldung: 09.04.2014
(73) Patentinhaber: Aktiebolaget SKF, 415 50 Göteborg (SE)
(72) Erfinder: LIANG, Baozhu, 97456 Hambach (DE); REUGELS, Michael, 97437 Hassfurt (DE)
(74) Vertreter: Kuhstrebe, Jochen
(86) Internationale Anmeldenummer: PCT/EP2012/059735
(87) Internationale Veröffentlichungsnummer: WO 2012/160146

(56) Entgegenhaltungen:
- WO-A1-2012/076353
- DE-A1-102008 020 068
- JP-A- 2008 164 062
- US-A1- 2002 186 908

## Beschreibung

Die vorliegende Erfindung betrifft ein Geometriekonzept für einen Bord eines Rollenlagers, insbesondere für Kegelrollenlager.

Führungsborde bei Rollenlagern, wie z. B. Kegelrollenlagern, können entweder gerade oder sphärisch ausgeführt werden. Gerade Borde werden hauptsächlich für Rollenlager kleinerer Durchmesser und somit auch kleinerer Bordbreiten eingesetzt. Hierbei ist eine Bordbreite oft zu gering, um ein definiertes Profil auf einer zur Verfügung stehenden Bordfläche herzustellen. Sphärische Borde, d.h. Borde mit konstanter Krümmung, finden ihre Anwendung größtenteils bei Rollenlagern mit größeren Durchmessern und somit auch mit größeren Bordbreiten. Ein sphärischer Bord ist dadurch gekennzeichnet, dass ein Radius, der eine einer Rollenlaufbahn zugewandte Bordform beschreibt, seinen Ursprung im Wesentlichen auf einer Rotationsachse der Rollen (Rollenrotationsachse) hat, wobei geringe Abweichungen aufgrund von Fluchtungsfehlern erlaubt sind.

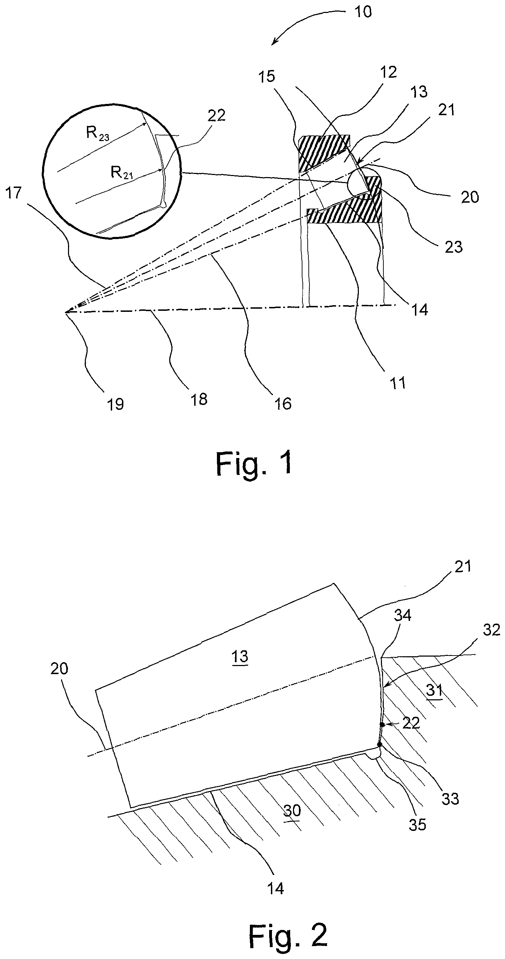

Zur näheren Erläuterung von Rollenlagern mit sphärischen Borden zeigt Fig. 1 in einer schematischen Darstellung einen Längsschnitt eines Rollenlagers 10, welches beispielhaft als Kegelrollenlager ausgebildet ist. Ähnliche Rollenlager sind beispielsweise auch aus der DE 10 2008 020068 A1 und der WO 2012/076353 A1 bekannt. Das Rollenlager 10 weist einen Lagerinnenring 11, einen Lageraußenring 12 und eine Mehrzahl von Rollen 13 auf, welche auf durch Innenseiten der Lagerringe 11, 12 gebildeten Laufflächen bzw. -bahnen 14, 15 abrollen können. Im Falle eines Kegelrollenlagers handelt es sich bei den Rollen bzw. Wälzkörpern 13 entsprechend um Kegelrollen.

bahnen 14, 15 abrollen können. Im Falle eines Kegelrollenlagers handelt es sich bei den Rollen bzw. Wälzkörpern 13 entsprechend um Kegelrollen.

Die Kegelrollen 13 können auf einer inneren Laufbahn 14, welche in den Lagerinnenring 11 eingeformt ist, und einer äußeren Laufbahn 15, welche in den Lageraußenring 12 eingeformt ist, abrollen. Die Laufbahnen 14, 15 sind bei einem Kegelrollenlager als Konusmäntel ausgebildet. In dem in Fig. 1 gezeigten Längsschnitt des Kegelrollenlagers 10 definieren die Laufbahnen 14, 15 in einer gedachten Verlängerung eine innere Gerade 16 und eine äußere Gerade 17, welche sich auf einer Dreh- bzw. Rotationsachse 18 des Rollenlagers 10 idealerweise an einem Drehpunkt 19 treffen.

Während eines Betriebs des Lagers 10 rotiert jede (Kegel-)Rolle 13 um eine eigene Rollenachse 20, wobei eine gedachte Verlängerung der Rollenachse 20 idealerweise ebenfalls den Drehpunkt 19 schneidet. Durch eine relative Lage von innerer Gerade 16, äußerer Gerade 17, Lagerdrehachse 18 und Rollenachse 20, welche sich alle in dem Drehpunkt 19 schneiden, ist für die Kegelrollen 13 eine Rollbedingung auf den Laufbahnen 14, 15 realisiert, so dass bei einer Relativdrehung von Lagerinnenring 11 und Lageraußenring 12 die Kegelrollen 13 auf den Laufbahnen 14, 15 im Wesentlichen ohne Schlupf abrollen und ein Anteil an diesbezüglicher Gleitreibung minimiert ist.

Um auch in axialer Richtung, d. h. in Richtung der Lagerdrehachse 18, bei einer Aufnahme von Axialkräften auftretende Reibung zu optimieren, können bei Rollenlagern die verwendeten Rollen 13 an ihrer Stirnseite 21 eine durch einen ersten Radius R₂₁ bestimmte erste Krümmung aufweisen, sodass sich als Stirnseitenfläche der Rollen 13 ein Teil einer Kugelfläche ergibt, die, wie es in der Vergrößerung von Fig. 1. angedeutet ist, an einem Kontaktpunkt 22 in Kontakt mit einem geraden bzw. sphärisch ausgeführten Bord 23 beispielsweise des Lagerinnenrings 11 steht. Abseits des Bereiches eines möglichen Kontaktpunktes 22, kann die gekrümmte Stirnseite auch eine durch einen zweiten Radius R₂₃ definierte zweite Krümmung aufweisen, die geringer ist als die erste Krümmung der kugeligen Stirnseitenfläche 21 der Rollen 13. Die Rolle kann in diesem Bereich auch eben sein. Als Krümmung wird allgemein die Richtungsänderung pro durchlaufene Länge eines infinitesimal kurzen Kurvenstücks verstanden. Ein Kreis mit dem Radius r hat somit überall die gleiche, konstante Krümmung 1/r, seine Richtung ändert sich überall gleich stark. Bei allen anderen Kurven kann die Krümmung von Kurvenpunkt zu Kurvenpunkt bzw. entlang eines Weges auf der einer 3-dimensionalen Oberfläche variieren. Den Kehrwert der Krümmung nennt man Krümmungsradius. Dies ist der Radius desjenigen Kreises (Krümmungskreis), der in einer Umgebung des Berührpunkts die beste Näherung an die betrachtete Kurve darstellt.

Bei Rollenlagern, wie beispielsweise Zylinder-, Tonnen- oder Kegelrollenlagern, die mit geraden bzw. ebenen Borden ausgeführt sind, weist der Rolle-Bord-Kontakt im Vergleich zu sphärisch ausgeführten Borden eine höhere Flächenpressung (Hertzsche Pressung) zwischen der Rollenstirnseite 21 und der dieser zugewandten Bordfläche auf. Dabei versteht man unter der Hertzschen Pressung die größte Spannung, die in der Mitte der Berührungsfläche zweier elastischer Körper herrscht. Werden, wie bei Rollenlagern mit geraden Borden, zwei elastische Körper (gewölbte Rollenstirnseite und gerader bzw. ebener Bord) gegeneinander gepresst, dann berühren sie sich im idealisierten Fall nur punktförmig. Durch die Elastizität entsteht aber im realen Fall an dem Kontaktpunkt 22 eine Abplattung und somit eine Berührungsfläche. Auf der Berührungsfläche entsteht in beiden Körpern eine charakteristische Spannungsverteilung (Flächenpressung), wobei die Spannung stets in der Mitte am höchsten ist. Berühren sich, wie hier, eine Kugeloberfläche und eine ebene Bordfläche, so entsteht eine Berühr- oder Kontaktellipse. Aufgrund der vergleichsweise hohen Flächenpressung kommt es bei Rollenlagern mit geraden Borden im Allgemeinen zu einem relativ schlechten Schmierfilmaufbau bei höheren wirkenden Kräften. Des Weiteren führen gerade bzw. ebene Borde im Vergleich zu sphärischen Borden zu kleineren Kontaktellipsen zwischen Rollenstirnseite und der dieser zugewandten Bordfläche, weshalb es zu einer Überschneidung der Kontaktellipse mit den Bordkanten nur bei extremen Belastungen kommen kann. Ebenso besteht im Allgemeinen bei gerade bzw. eben ausgeführten Borden eine geringe Empfindlichkeit des Kontaktpunktes 22 gegenüber Fluchtungsfehlern, sodass ein definierter Kontaktpunkt 22 zwischen Rolle 13 und Bord möglich ist. Während bei eben ausgeführten Borden einerseits eine größere Schiefstellung der Rollen 13 ermöglicht wird, ergibt sich andererseits eine vergleichsweise schlechte Führung der Rollen während des Laufs.

Kegelrollenlager im Großlagerbereich können, wie anhand von Fig. 1 gezeigt, mit sphärischen Borden 23 ausgeführt werden, was verglichen mit geraden bzw. ebenen Borden eine geringere Flächenpressung zwischen der Rollenstirnseite 21 und der der Rolle 13 zugewandten Bord- bzw. Anlauffläche zur Folge hat. Sphärisch ausgeführte Borde 23 führen, verglichen zu geraden Borden, außerdem zu größeren Kontaktellipsen zwischen Rollenstirnseite 21 und gegenüberliegender Bordfläche, sodass es häufiger zu Überschneidungen der Kontaktellipse mit den Bordkanten und damit zu Kantenspannungen kommen kann. Im Allgemeinen besteht bei sphärisch ausgeführten Borden 23 eine höhere Empfindlichkeit des Kontaktpunktes 22 gegenüber Fluchtungsfehlern als es bei ebenen bzw. gerade ausgeführten Borden der Fall ist. Obwohl sphärische Borde einerseits eine geringere Schiefstellung der Rolle 13 zur Folge haben, kann andererseits aufgrund der engen Schmiegung zwischen Rollenstirnseite 21 und der der Rolle 13 zugewandten Bordfläche die Rolle 13 während des Laufs besser geführt werden. Durch unterschiedliche Wahl der Krümmungsradien (und/oder deren Ursprüngen) von Rollenstirnfläche 21 und sphärischer Bordfläche ist auch mit sphärischen Borden theoretisch ein definierter Kontaktpunkt 22 zwischen Rolle 13 und Bord 23 möglich.

Einer der Hauptnachteile eines sphärischen Bords ist jedoch die resultierende Empfindlichkeit des Kontaktpunktes 22 zwischen Rollenstirnseite 21 und Bord 23 im Hinblick auf Fluchtungsfehler. Abweichungen im Laufbahnwinkel, Rollenwinkel, Bordradius, sowie Rollenstirnseitenradius haben hierauf einen entscheidenden Einfluss.

Die Aufgabe der vorliegenden Erfindung besteht darin, eine verbesserte Bordgeometrie zur Verfügung zu stellen, die die obigen Nachteile verringert.

Um dies zu erreichen, wird vorliegend einen Lagerring nach Anspruch 1 mit entsprechend optimierter Bordflächengeometrie vorgeschlagen, und zwar einer speziellen Geometrie einer der Laufbahn zugewandte Anlauffläche des Bordes, mit der die Rollen in Kontakt kommen können. Der Bord weist eine der Laufbahn zugewandte Anlauffläche für Wälzkörperrollen bzw. Rollen auf, deren Krümmung von einem Startpunkt bis zu einem Ende der Anlauffläche monoton fällt.

Dadurch wird durch die gekrümmte Oberfläche zum einen eine geringe Hertzsche Pressung gewährleistet, während durch die Verringerung der Krümmung bis zum Ende der Anlauffläche gleichzeitig das Risiko einer Überschneidung des Wälzkörpers mit der Bordkante minimiert werden kann.

Einige Ausführungsbeispiele der Erfindung sehen dazu einen Lagerring für ein Rollenlager mit einer Laufbahn für wenigstens eine Rolle vor, welche eine zumindest teilweise kugelig ausgebildete Rollenstirnfläche aufweist. Der Lagerring weist zur Ausleitung axialer Kräfte einen stirnseitig an der Laufbahn angeordneten bzw. an diese angrenzenden Bord mit einer der Rollenstirnfläche zugewandten Anlauffläche auf, deren Krümmung von einem Startpunkt Innerhalb der Anlauffläche bis zu einem Ende der Anlauffläche streng monoton fällt. Bei einigen Ausführungsbeispielen erstreckt sich der Bord bzw. die Anlauffläche in einer zur Laufbahn im Wesentlichen senkrechten Richtung von der Laufbahn weg. Die ist beispielsweise so zu verstehen, dass der Bord bzw. die Anlauffläche sich derart von der Laufbahn weg erstrecken, dass eine Rolle bzw. ein Rollenkörper an einer Bewegung parallel zur Laufbahn durch Kontakt mit der Anlauffläche gehindert werden kann.

Bei einer ersten Variante der Erfindung ist der Startpunkt an einem inneren, an die Laufbahn angrenzenden, Ende der Anlauffläche angeordnet, was die maximale Kompensation von Schiefstellungen in einer Richtung erreichen kann. Der Startpunkt kann also angrenzend zu einer Bord- bzw. Einstichkante liegen.

Bei einer zweiten Variante der Erfindung ist der Startpunkt zwischen einen inneren, an die Laufbahn angrenzenden, Ende der Anlauffläche und einem äußeren, von der Laufbahn abgewandten, Ende der Anlauffläche angeordnet, wobei die Krümmung der Laufbahn von dem Startpunkt zu beiden Enden der Anlauffläche hin monoton fällt.

Dies kann eine Schiefstellung des Lagers in zwei unterschiedlichen Richtungen kompensieren.

Die Rolle-Bordgeometrie kann bei einigen Ausführungsbeispielen so ausgelegt sein, dass der Kontaktpunkt bzw. -bereich zwischen Rollenstirnseite und Anlauffläche bei idealer Geometrie am Startpunkt liegt.

Die Krümmung fällt von dem Startpunkt bis zu dem jeweiligen Ende der Anlauffläche streng monoton, was für jeden Punkt auf der Anlauffläche eine größtmögliche Kontaktellipse gewährleisten kann.

Bei einigen weiteren Ausführungsbeispielen ist der monotone Krümmungsverlauf derart, dass innerhalb eines den Startpunkt umfassenden ersten Bereichs die Krümmung streng monoton fällt. Gemäß einigen Ausführungsbeispielen handelt es sich bei dem Rollenlager um ein Kegelrollenlager. Die Rolle ist dann dementsprechend als Kegelrolle ausgebildet. Weitere vorteilhafte Ausgestaltungen und Weiterbildungen sind Gegenstand der abhängigen Ansprüche.

Ausführungsbeispiele der vorliegen Erfindung werden nachfolgend, bezugnehmend auf die beiliegenden Figuren, detaillierter erläutert. Es zeigen:
- Fig. 1: einen schematischen Längsschnitt durch ein Rollenlager mit sphärischen Borden;
- Fig. 2: einen schematischen Längsschnitt durch ein Rollenlager mit einem Lagerring gemäß einem Ausführungsbeispiel der vorliegenden Erfindung;
- Fig. 3: eine vergrößernde Darstellung des Rolle-Bord-Kontaktbereichs von Fig. 2;
- Fig. 4: einen schematischen Längsschnitt durch ein Rollenlager mit einem Lagerring gemäß einem weiteren Ausführungsbeispiel der vorliegenden Erfindung; und
- Fig. 5: ein schematisches Flussdiagramm für ein Ausführungsbeispiel eines Herstellungsverfahrens für ein Lagerring.

Fig. 2 zeigt in einem schematischen Längsschnitt einen Ausschnitt eines Rollenlagers gemäß einem Ausführungsbeispiel der vorliegenden Erfindung.

Dargestellt ist ein Teil eines Lagerrings 30 für das Rollenlager mit einer Laufbahn 14 für wenigstens eine Rolle 13. Die Rolle 13 weist eine gekrümmte Rollenstirnfläche 21 auf, die z. B. zumindest teilweise sphärisch sein kann. Zur Ausleitung axialer Kräfte weist der Lagerring 30 einen stirnseitig zu bzw. an der Stirnseite der Rolle 13 und der Laufbahn 14 angeordneten Bord 31 mit einer der Rollenstirnfläche und somit auch der Laufbahn 14 zugewandten Anlauffläche 32 auf.

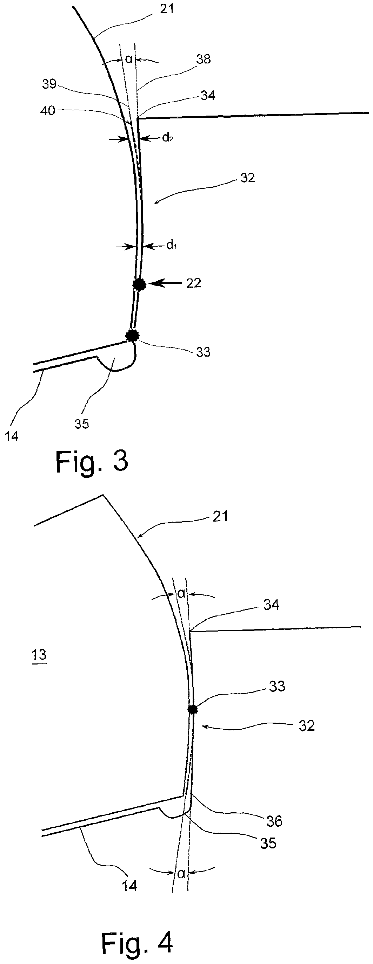

Wie es neben Fig. 2 auch in der vergrößernden Ansicht der Fig. 3 dargestellt ist, verringert sich eine Krümmung einer der Laufbahn 14 zugewandte Anlauffläche 32 für Wälzkörperrollen von dem an die Laufbahn angrenzenden Startpunkt 33 auf der Anlauffläche 32 bis zu einem Ende 34 der Anlauffläche streng monoton, sodass beispielsweise ein Spaltmaß d₂ größer ist als ein Spaltmaß d₁ zwischen Rolle 13 und Anlauffläche 32, wenn der Kontakt zwischen Rolle 13 und Anlauffläche 32 im dargestellten Kontaktpunkt 22 zustande kommt. Mit anderen Worten ist der Startpunkt 33 ein Punkt maximaler Krümmung auf der Anlauffläche 32.

Wie bereits erwähnt, soll unter der Krümmung vorliegend eine Richtungsänderung pro Längeneinheit verstanden werden. Als ein Maß für eine vorzeichenunabhängige Richtungsänderung ist die Krümmung positiv oder Null. Die Krümmung z. B. einer Geraden ist überall gleich null, weil sich ihre Richtung nicht ändert. Ein Kreis mit einem Radius r hat überall gleiche Krümmung (nämlich 1/r), denn seine Richtung ändert sich überall gleich stark. Bei allen anderen Kurven wechselt die Krümmung von Kurvenpunkt zu Kurvenpunkt. Die Krümmung einer Kurve in einem Punkt gibt also an, wie stark die Kurve in der unmittelbaren Umgebung des Punktes von einer Geraden abweicht. Ein Maß für die Krümmung einer gewölbten Fläche, wie beispielsweise die Anlauffläche 32, kann beispielsweise auch die zunehmende Abweichung der Fläche von einer Tangentialebene an die Fläche in einem gegebenen Punkt sein. Eine verstärkte Krümmung macht sich dann als stärkere Abweichung von der Ebene bemerkbar. Ein monoton fallender Krümmungsverlauf bedeutet somit, dass die Krümmung, wenn man sich entlang einer Ortskurve entlang einer Oberfläche bewegt, bei jedem infinitesimalen Schritt entlang der Ortskurve entweder kleiner wird oder gleich bleibt. Ein streng monoton fallender Krümmungsverlauf bedeutet entsprechend, dass die Krümmung bei jedem infinitesimalen Schritt entlang der Ortskurve kleiner wird.

Bei dem in den Fig. 2 und 3 skizzierten Ausführungsbeispiel befindet sich der Startpunkt 33 unmittelbar an einem Einstich 35 zwischen der Laufbahn 14 und der Anlauffläche 32, also an dem inneren, an die Laufbahn 14 angrenzenden Ende der Anlauffläche 32. Somit nimmt die Krümmung von dem Startpunkt 33 bis zu einem dem äußeren, von der Laufbahn abgewandten, Ende 34 der Anlauffläche 32 monoton ab.

Gemäß einigen Ausführungsbeispielen ermöglicht die monoton bzw. streng monoton abnehmende Krümmung der Anlauffläche 32 eine Öffnung des Bords 31 bzw. der Anlauffläche 32 in einem Winkelbereich α von größer als 0° bis 30°, vorzugsweise in einem Bereich 0° 0' 6" ≤ α ≤ 30°.

Die Öffnung α der Anlauffläche 32 kann beispielsweise beschrieben werden, indem man den Winkel zwischen einer Tangentialebene 38 an das Ende der Anlauffläche 34 und einer zweiten Tangentialebene 39 an eine von dem Startpunkt 33 bis zu dem Ende der Anlauffläche 34 verlängerten Kugeloberfläche 40 bestimmt, deren Krümmung der Krümmung am Startpunkt 33 entspricht. Bei einigen Ausführungsbeispielen liegt dieser Winkel in einem Bereich von größer als 0° bis 30°.

Nachdem anhand der Figuren 2 und 3 Ausführungsbeispiele beschrieben wurden, bei denen der Startpunkt 33 am unteren Bereich des Bordes 31 (angrenzend zur Bordkante/Einstichkante 35) angeordnet ist, wird nachfolgend anhand der Figur 4 ein weiteres Ausführungsbeispiel beschrieben, bei dem der Startpunkt 33 nicht an den Einstich 35 angrenzt sondern zwischen einem inneren, an die Laufbahn angrenzenden, Ende 36 der Anlauffläche und einem äußeren, von der Laufbahn abgewandten, Ende 34 der Anlauffläche angeordnet ist. Dabei fällt die Krümmung der Anlauffläche 32 von dem Startpunkt 33 zu beiden Enden der Anlauffläche hin monoton oder streng monoton ab, bzw. verringert sich monoton oder streng monoton.

Bei dem in Figur 4 gezeigten Ausführungsbeispiel kann die Rolle-Bord-Kontaktgeometrie so gewählt sein, dass der Kontaktpunkt 22 im Bereich des Startpunktes 33 liegt. Bezüglich der Öffnung der Anlauffläche zu deren Enden hin gilt das bezüglich Figur 3 gesagte äquivalent, das heißt der die Öffnung beschreibende Winkel α kann zwischen ca. 0° 0' 6" und 30° liegen.

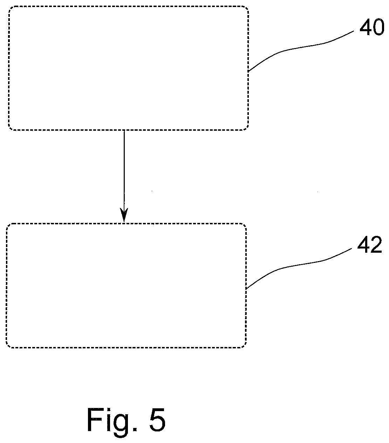

Anhand von Fig. 5 wird nun der Vollständigkeit halber noch ein Ausführungsbeispiel eines Herstellungsverfahrens zum Herstellen eines Lagerrings für ein Rollenlager mit einer Laufbahn für wenigstens eine Rolle dargestellt.

In einem Vorbereitungsschritt 40 wird ein an einer Stirnseite der Laufbahn angeordneter Bord zur Ausleitung axialer Kräfte bereitgestellt, der sich in einer zur Laufbahn im Wesentlichen senkrechten Richtung von der Laufbahn weg erstreckt. In einem Optimierschritt 42 wird eine der Laufbahn zugewandte Anlauffläche für Wälzkörperrollen an dem Bord gemäß Anspruch 7 erzeugt. Zusammenfassend ist die vorgeschlagene Bordform geeignet, um die Empfindlichkeit des Rolle-Bord-Kontaktpunktes gegenüber Fluchtungsfehlern und Schiefstellungen des Lagers in der Anwendung zu reduzieren, aber dennoch eine ausreichende Führung der Rolle während des Laufs auf der Laufbahn gewährleisten zu können. Die erfindungsgemäße Bordgeometrie gewährleistet eine gute Rollenführung bei geringer Hertzschen Pressung, sowie ein geringes Risiko für Kantenüberschneidungen und der daraus resultierenden unerwünschten Kantenspannungen.

Die erfindungsgemäße Bord-Geometrie weist mit anderen Worten folgende vorteilhafte Eigenschaften auf:
- Aufgrund der gekrümmten Anlauffläche 32 bleibt die Rollenführung während des Laufs erhalten,
- Geringe Hertzsche Pressung aufgrund der gekrümmten Anlauffläche 32,
- Die sich zum Ende verringernde Krümmung der Anlauffläche 32 reduziert die Größe der Kontaktellipse im Vergleich zu rein sphärischen Borden, wodurch eine Überschneidung der Kontaktellipse mit den Bordkanten vermieden wird,
- Aufgrund der sich zum Ende verringernde Krümmung der Anlauffläche 32 besteht eine geringere Empfindlichkeit der Lage des Kontaktpunktes 22 zwischen Rollenstirnseite 21 und Anlauffläche 32 im Hinblick auf Fluchtungsfehler,
- Ein definierter Kontaktpunkt 22 zwischen Rolle 13 und Anlauffläche 32 ist möglich.

Die vorgeschlagene Bordgeometrie ist so ausgelegt, dass der Kontaktpunkt zwischen Rollenstirnseite und Bord in der Nähe des Startpunktes 33 liegen kann. Verschiebt sich der Kontaktpunkt 22 aufgrund von Fluchtungsfehlern in Richtung der Enden der Anlauffläche 32, so ist die Empfindlichkeit stark reduziert, was ein "wandern" des theoretischen Kontaktpunktes über die Bordkanten hinaus und somit auch hohe Kantenspannungen verhindern kann.

Obwohl die vorliegende Erfindung anhand einer Ausführungsform mit Kegelrollenlagern und Kegelrollen beschrieben wurde, sind Ausführungsbeispiele nicht auf derartige Ausgestaltungen beschränkt. Prinzipiell kann die vorliegende Erfindung auch auf andere Rollen und Rollenlager, wie z.B. auf Zylinder- und Tonnenlager, angewendet werden.

### Bezugszeichenliste

- 10: Rollenlager
- 11: Lagerinnenring
- 12: Lageraußenring
- 13: Rolle
- 14: innere Rollenlaufbahn
- 15: äußere Rollenlaufbahn
- 16: innere Gerade
- 17: äußere Gerade
- 18: Lagerrotationsachse
- 19: Drehpunkt
- 20: Rollenachse
- 21: Rollenstirnseite
- 22: Kontaktpunkt
- 23: sphärischer Bord
- 30: Teil eines Lagerrings
- 31: Bord eines Lagerrings
- 32: Anlauffläche
- 33: Startpunkt
- 34: äußeres Ende der Anlauffläche
- 35: Einstich
- 36: inneres Ende der Anlauffläche
- 38: Tangentialebene
- 39: zweite Tangentialebene
- 40: Vorbereitungsschritt
- 42: Optimierschritt

## Patentansprüche

1. Ein Lagerring (30) für ein Rollenlager mit einer Laufbahn (14; 15) für wenigstens eine Wälzkörperrolle (13) und einem zur Ausleitung axialer Kräfte an einer Stirnseite der Laufbahn angeordneten Bord (31), der sich von der Laufbahn weg erstreckt und eine der Laufbahn (14; 15) zugewandte Anlauffläche (32) für Wälzkörperrollen (13) aufweist, deren Krümmung von einem Startpunkt (33) bis zu einem Ende (34) der Anlauffläche streng monoton fällt,
wobei der Startpunkt (33) zwischen einen inneren, an die Laufbahn angrenzenden, Ende (36) der Anlauffläche (32) und einem äußeren, von der Laufbahn abgewandten, Ende (34) der Anlauffläche (32) angeordnet ist, und die Krümmung der Anlauffläche (32) von dem Startpunkt (33) zu beiden Enden der Anlauffläche (32) hin jeweils streng monoton fällt oder wobei der Startpunkt (33) an dem inneren, an die Laufbahn angrenzenden, Ende (36) der Anlauffläche (32) angeordnet ist.

2. Der Lagerring (30) nach Anspruch 1, wobei ein Winkel (α) zwischen einer Tangentialebene (38) an das Ende (34) der Anlauffläche (32) und einer zweiten Tangentialebene an eine von dem Startpunkt (33) bis zu dem Ende der Anlauffläche (32) verlängerten Kugeloberfläche (40) einer der Krümmung am Startpunkt entsprechenden Krümmung in einem Bereich von größer als 0° bis 30° liegt.

3. Der Lagerring (30) nach einem der vorhergehenden Ansprüche, wobei das Rollenlager ein Kegelrollenlager zur Verwendung mit einer Kegelrolle (13) ist.

4. Der Lagerring (30) nach einem der vorhergehenden Ansprüche, wobei der Lagerring (30) ein Lagerinnenring ist.

5. Rollenlager mit einem Lagerinnenring (30) gemäß einem der Ansprüche 1 bis 4, sowie mit zumindest einer Kegelrolle (13).

6. Rollenlager gemäß Anspruch 5, bei dem die zumindest eine Kegelrolle an ihrem der Anlauffläche (32) zugewandten Oberflächenbereich eine gekrümmte Oberfläche (21) mit einer konstanten Krümmung aufweisen.

7. Verfahren zum Herstellen eines Lagerrings (30) für ein Rollenlager mit einer Laufbahn (14, 15) für wenigstens eine Wälzkörperrolle (13), umfassend:
Bereitstellen eines an einer Stirnseite der Laufbahn (14, 15) angeordneten Bordes (31) zur Ausleitung axialer Kräfte, der sich von der Laufbahn (14, 15) weg erstreckt; und
Erzeugen einer der Laufbahn (14, 15) zugewandte Anlauffläche (32) für Wälzkörperrollen an dem Bord (31), wobei die Krümmung der Anlauffläche (32) von einem Startpunkt (33) bis zu einem Ende (34) der Anlauffläche (32) streng monoton fällt,
wobei der Startpunkt (33) zwischen einen inneren, an die Laufbahn angrenzenden, Ende (36) der Anlauffläche (32) und einem äußeren, von der Laufbahn abgewandten, Ende (34) der Anlauffläche (32) angeordnet ist, und die Krümmung der Anlauffläche (32) von dem Startpunkt (33) zu beiden Enden der Anlauffläche (32) hin jeweils streng monoton fällt, oder
wobei der Startpunkt (33) an dem inneren, an die Laufbahn angrenzenden, Ende (36) der Anlauffläche (32) angeordnet ist.

## Claims

1. Bearing ring (30) for a roller bearing having a raceway (14; 15) for at least one rolling-body roller (13) and a rim (31) which is arranged on an end side of the raceway in order to dissipate axial forces, extends away from the raceway and has a run-on face (32) for rolling-body rollers (13), which run-on face (32) faces the raceway (14; 15) and the curvature of which run-on face (32) decreases strictly monotonously from a start point (33) as far as an end (34) of the run-on face, the start point (33) being arranged between an inner end (36) of the run-on face (32), which inner end (36) adjoins the raceway, and an outer end (34) of the run-on face (32), which outer end (34) faces away from the raceway, and the curvature of the run-on face (32) decreasing in each case strictly monotonously from the start point (33) towards the two ends of the run-on face (32),
or
the start point (33) being arranged at the inner end (36) of the run-on face (32), which inner end (36) adjoins the raceway.

2. Bearing ring (30) according to Claim 1, an angle (α) between a tangential plane (38) onto the end (34) of the run-on face (32) and a second tangential plane onto a spherical surface (40) of a curvature which corresponds to the curvature at the start point, which spherical surface (40) is extended from the start point (33) as far as the end of the run-on face (32), lying in a range from greater than 0° to 30°.

3. Bearing ring (30) according to either of the preceding claims, the roller bearing being a tapered roller bearing for use with a tapered roller (13).

4. Bearing ring (30) according to one of the preceding claims, the bearing ring (30) being a bearing inner ring.

5. Roller bearing having a bearing inner ring (30) according to one of Claims 1 to 4, and having at least one tapered roller (13).

6. Roller bearing according to Claim 5, in which the at least one tapered roller has a curved surface (21) with a constant curvature on its surface region which faces the run-on face (32).

7. Method for producing a bearing ring (30) for a roller bearing having a raceway (14, 15) for at least one rolling-body roller (13), comprising:
provision of a rim (31) which is arranged on an end side of the raceway (14, 15) in order to dissipate axial forces, which rim (31) extends away from the raceway (14, 15); and
production of a run-on face (32) for rolling-body rollers on the rim (31), which run-on face (32) faces the raceway (14, 15), the curvature of the run-on face (32) decreasing strictly monotonously from a start point (33) as far as an end (34) of the run-on face (32),
the start point (33) being arranged between an inner end (36) of the run-on face (32), which end (36) adjoins the raceway, and an outer end (34) of the run-on face (32), which end (34) faces away from the raceway, and the curvature of the run-on face (32) decreasing in each case strictly monotonously from the start point (33) towards the two ends of the run-on face (32),
or
the start point (33) being arranged at the inner end (36) of the run-on face (32), which inner end (36) adjoins the raceway.

## Revendications

1. Bague de palier (30) pour un palier à rouleaux comportant un chemin de roulement (14 ; 15) pour au moins un rouleau de corps de roulement (13) et un bord (31) disposé sur un côté frontal du chemin de roulement pour dévier des forces axiales, lequel s'étend à l'écart du chemin de roulement et présente une surface de butée (32) pour les rouleaux de corps de roulement (13), tournée vers le chemin de roulement (14, 15), dont la courbure diminue de manière strictement monotone depuis un point de départ (33) jusqu'à une extrémité (34) de la surface de butée,
le point de départ (33) étant disposé entre une extrémité intérieure (36) de la surface de butée (32), adjacente au chemin de roulement, et une extrémité extérieure (34) de la surface de butée (32), opposée au chemin de roulement, et la courbure de la surface de butée (32) diminuant de manière strictement monotone depuis le point de départ (33) vers les deux extrémités de la surface de butée (32), ou
le point de départ (33) étant disposé au niveau de l'extrémité intérieure (36) de la surface de butée (32), adjacente au chemin de roulement.

2. Bague de palier (30) selon la revendication 1, dans laquelle un angle (α) compris entre un plan tangentiel (38) au niveau de l'extrémité (34) de la surface de butée (32) et un deuxième plan tangentiel au niveau d'une surface sphérique (40) se prolongeant depuis le point de départ (33) jusqu'à l'extrémité de la surface de butée (32) d'une courbure correspondant à la courbure au niveau du point de départ, est compris dans une plage de plus de 0° à 30°.

3. Bague de palier (30) selon l'une quelconque des revendications précédentes, dans laquelle le palier à rouleaux est un palier à rouleaux sphériques destiné à être utilisé avec un rouleau sphérique (13).

4. Bague de palier (30) selon l'une quelconque des revendications précédentes, dans laquelle la bague de palier (30) est une bague de palier interne.

5. Palier à rouleaux comprenant une bague de palier interne (30) selon l'une quelconque des revendications 1 à 4, ainsi qu'au moins un rouleau sphérique (13).

6. Palier à rouleaux selon la revendication 5, dans lequel l'au moins un rouleau sphérique présente, au niveau de sa région de surface tournée vers la surface de butée (32), une surface courbe (21) de courbure constante.

7. Procédé de fabrication d'une bague de palier (30) pour un palier à rouleaux comprenant un chemin de roulement (14, 15) pour au moins un rouleau de corps de roulement (13), comprenant les étapes consistant à :
fournir un bord (31) disposé au niveau d'un côté frontal du chemin de roulement (14, 15) pour la déviation de forces axiales, qui s'étend à l'écart du chemin de roulement (14, 15) ; et
produire une surface de butée (32) tournée vers le chemin de roulement (14, 15) pour des rouleaux de corps de roulement au niveau du bord (31), la courbure de la surface de butée (32) diminuant de manière strictement monotone depuis un point de départ (33) jusqu'à une extrémité (34) de la surface de butée (32),
le point de départ (33) étant disposé entre une extrémité intérieure (36) de la surface de butée (32), adjacente au chemin de roulement, et une extrémité extérieure (34) de la surface de butée (32), opposée au chemin de roulement, et la courbure de la surface de butée (32) diminuant de manière strictement monotone depuis le point de départ (33) jusqu'aux deux extrémités de la surface de butée (32),
ou
le point de départ (33) étant disposé au niveau de l'extrémité intérieure (36) de la surface de butée (32) adjacente au chemin de roulement.
